(19) Europäisches Patentamt
European Patent Office
Office européen des brevets

(11) **EP 3 889 111 A1**

(12) **EUROPEAN PATENT APPLICATION**
published in accordance with Art. 153(4) EPC

(43) Date of publication:
**06.10.2021 Bulletin 2021/40**

(51) Int Cl.:
*C01G 53/00* (2006.01)          *H01M 4/525* (2010.01)

(21) Application number: **19888329.0**

(86) International application number:
**PCT/JP2019/042798**

(22) Date of filing: **31.10.2019**

(87) International publication number:
**WO 2020/110590 (04.06.2020 Gazette 2020/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.11.2018 JP 2018222621**

(71) Applicant: **Panasonic Intellectual Property
Management Co., Ltd.
Osaka-shi, Osaka 540-6207 (JP)**

(72) Inventors:
• **AOKI, Yoshinori
Osaka (JP)**
• **OGASAWARA, Takeshi
Osaka (JP)**
• **TOCHIO, Takaya
Osaka (JP)**

(74) Representative: **Vigand, Philippe et al
Novagraaf International SA
Chemin de l'Echo 3
1213 Onex - Genève (CH)**

(54) **POSITIVE ELECTRODE ACTIVE MATERIAL FOR NONAQUEOUS ELECTROLYTE SECONDARY BATTERIES, METHOD FOR PRODUCING POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57)    This positive electrode active material for nonaqueous electrolyte secondary batteries is characterized in that: the ratio of Ni, the ratio of Nb and the ratio of Co relative to the total amount of metal elements excluding Li in a lithium transition metal oxide are respectively within the range of 90 mol% $\leq$ Ni < 100 mol%, the range of 0 mol% < Nb $\leq$ 3 mol% and the range of Co $\leq$ 2 mol%; the ratio of metal elements excluding Li in a Li layer of a layered structure relative to the total amount of metal elements excluding Li in the lithium transition metal oxide is within the range of from 0.9 mol% to 2.5 mol% (inclusive); and with respect to the lithium transition metal oxide, the half-value width n of the diffraction peak of the (208) plane of the X-ray diffraction pattern as determined by X-ray diffractometry is within the range of 0.30° $\leq$ n $\leq$ 0.50°.

**Description**

TECHNICAL FIELD

The present invention relates to a technology of a positive electrode active material for non-aqueous electrolyte secondary batteries, a method for producing a positive electrode active material for non-aqueous electrolyte secondary batteries, and a non-aqueous electrolyte secondary battery.

BACKGROUND

In recent years, as a secondary battery with high output and high energy density, non-aqueous electrolyte secondary batteries are widely used, which include a positive electrode, a negative electrode, and a non-aqueous electrolyte and which perform charging/discharging by moving lithium ions or the like between the positive electrode and the negative electrode.

As a positive electrode active material used for a positive electrode of a non-aqueous electrolyte secondary battery, the following materials are known, for example.

For example, Patent Document 1 discloses a positive electrode active material for non-aqueous electrolyte secondary batteries, which is represented by formula 1: $Li_xNi_{1-y-z-v-w}Co_yAl_zM1_vM2_wO_2$, wherein: the element $M^1$ in the above-noted formula 1 is at least one selected from the group consisting of Mn, Ti, Y, Nb, Mo and W; the element $M^2$ in the above-noted formula 1 is at least two selected from the group consisting of Mg, Ca, Sr and Ba, wherein the element $M^2$ contains at least Mg and Ca; and the above-noted formula 1 satisfies $0.97 \leq x \leq 1.1$, $0.05 \leq y \leq 0.35$, $0.005 \leq z \leq 0.1$, $0.0001 \leq v \leq 0.05$, and $0.0001 \leq w \leq 0.05$.

Further, for example, Patent Document 2 discloses a positive electrode active material for non-aqueous electrolyte secondary batteries, whose composition is represented by the following formula (I), and which contains at least one element selected from Mo, W, Nb, Ta and Re in a ratio of no less than 0.1 mol% and no greater than 5 mol% relative to a total molar amount of Mn, Ni, and Co in the formula (I).

$$[L]3a[M]3b[O2]6c \ldots \qquad (I)$$

(here, in the above formula (I), L is an element containing at least Li, and M is an element containing at least Ni, Mn, and Co, or at least Li, Ni, Mn, and Co, wherein:

$$0.4 \leq \text{molar ratio of Ni} / (\text{Mn} + \text{Ni} + \text{Co}) < 0.7;$$

$$0.1 < \text{molar ratio of Mn} / (\text{Mn} + \text{Ni} + \text{Co}) \leq 0.4;$$

and

$$0.1 \leq \text{molar ratio of Co} / (\text{Mn} + \text{Ni} + \text{Co}) \leq 0.3,$$

and a molar ratio of Li in M is no less than 0 and no greater than 0.05).

CITATION LIST

PATENT LITERATURE

   Patent Document 1: JP 2006-310181 A
   Patent Document 2: JP 2009-289726 A

SUMMARY

Although a lithium transition metal oxide containing Ni at a ratio of 90 mol% or greater and less than 100 mol% relative to the total amount of metal elements excluding Li is expected as a positive electrode active material exhibiting high battery performance, such a lithium transition metal oxide has a drawback in that the charge/discharge efficiency is low. In order to improve the charge/discharge efficiency, it is preferable to, for example, add 5 mol% or more of Co as in Patent Document 1. However, since cobalt is expensive, it is desired to minimize the Co content in view of manufacturing costs.

In light of the above, the present disclosure is directed to providing a positive electrode active material capable of improving the charge/discharge efficiency even when the Co content is suppressed in a lithium transition metal oxide in which the ratio of Ni is in the range from 90 mol% to less than 100 mol% relative to the total amount of metal elements excluding Li. The present disclosure is further directed to providing a method for producing this positive electrode active material, and providing a non-aqueous electrolyte secondary battery.

A positive electrode active material for non-aqueous electrolyte secondary batteries according to one aspect of the present disclosure includes a lithium transition metal oxide having a layered structure and containing Ni, Nb, and an arbitrary element of Co, wherein: a ratio of Ni relative to a total amount of metal elements excluding Li in the lithium transition metal oxide is in a range of 90 mol% ≤ Ni < 100 mol%; a ratio of Nb relative to the total amount of metal elements excluding Li in the lithium transition metal oxide is in a range of 0 mol% < Nb ≤ 3 mol%; a ratio of Co relative to the total amount of metal elements excluding Li in the lithium transition metal oxide is in a range of Co ≤ 2.0 mol%; a ratio of metal elements other than Li present in a Li layer in the layered structure is in a range from 0.9 mol% to 2.5 mol% relative to the total amount of metal elements excluding Li in the lithium transition metal oxide; and, regarding the lithium transition metal oxide, a half width n of a diffraction peak of a (208) plane in an X-ray diffraction pattern obtained by X-ray diffractometry is such that 0.30° ≤ n ≤ 0.50°.

A method for producing the positive electrode active material for non-aqueous electrolyte secondary batteries according to one aspect of the present disclosure includes a multi-step firing process including: a first firing step of firing a mixture including a Li-containing compound, a compound containing Ni and an arbitrary element of Co, and a Nb-containing compound, in a firing furnace under an oxygen stream at a first heating rate up to a first set temperature no lower than 450 °C and no higher than 680 °C; and a second firing step of firing the fired product obtained by the first firing step, under an oxygen stream at a second heating rate up to a second set temperature exceeding 680 °C and no higher than 800 °C. The first heating rate is in a range from 1.5 °C/min to 5.5 °C/min. The second heating rate is lower than the first heating rate, and is in a range from 0.1 °C/min to 3.5 °C/min.

A non-aqueous electrolyte secondary battery according to one aspect of the present disclosure includes a positive electrode containing the above-noted positive electrode active material for non-aqueous electrolyte secondary batteries.

According to one aspect of the present disclosure, in a lithium transition metal oxide in which the ratio of Ni is in the range from 90 mol% to less than 100 mol% relative to the total amount of metal elements excluding Li, the charge/discharge efficiency can be improved even when the Co content is suppressed.

DESCRIPTION OF EMBODIMENTS

A positive electrode active material for non-aqueous electrolyte secondary batteries according to one aspect of the present disclosure includes a lithium transition metal oxide having a layered structure and containing Ni, Nb, and an arbitrary element of Co, wherein: a ratio of Ni relative to a total amount of metal elements excluding Li in the lithium transition metal oxide is in a range of 90 mol% ≤ Ni < 100 mol%; a ratio of Nb relative to the total amount of metal elements excluding Li in the lithium transition metal oxide is in a range of 0 mol% < Nb ≤ 3 mol%; a ratio of Co relative to the total amount of metal elements excluding Li in the lithium transition metal oxide is in a range of Co ≤ 2.0 mol%; a ratio of metal elements other than Li present in a Li layer in the layered structure is in a range from 0.9 mol% to 2.5 mol% relative to the total amount of metal elements excluding Li in the lithium transition metal oxide; and, regarding the lithium transition metal oxide, a half width n of a diffraction peak of a (208) plane in an X-ray diffraction pattern obtained by X-ray diffractometry is such that 0.30° ≤ n ≤ 0.50°.

Generally, in a lithium transition metal oxide in which the ratio of Ni is in the range from 90 mol% to less than 100 mol% relative to the total amount of metal elements excluding Li, when the Co content is 2 mol% or less, there occurs the problem that the charge/discharge efficiency of the non-aqueous electrolyte secondary battery is low. It is supposed that this problem occurs because the layered structure of the lithium transition metal oxide becomes unstable. However, it is supposed that, by including a predetermined amount of Nb in the lithium transition metal oxide as in one aspect of the present disclosure, the layered structure can be stabilized even when the Co content is 2 mol% or less. It is also supposed that, when a predetermined amount of metal elements other than Li is present in the Li layer of the layered structure as in one aspect of the present disclosure, O-O repulsion in the layered structure is suppressed during charging such that the layered structure is further stabilized. Furthermore, noting that the half width of the diffraction peak of the (208) plane in an X-ray diffraction pattern obtained by X-ray diffractometry is an index that indicates fluctuations in the alignment between the Li layer and the transition metal layer in the layered structure, when the half width is within the above-noted predetermined range according one aspect of the present disclosure, an appropriate level of fluctuation occurs in the alignment between the Li layer and the transition metal layer in the layered structure, which is considered to lead to stabilization of the layered structure. As such, each of the above-noted features according to one aspect of the present disclosure contributes to stabilization of the layered structure of the lithium transition metal oxide. Accordingly, in a lithium transition metal oxide in which the ratio of Ni is in the range from 90 mol% to less than 100 mol% relative to the total amount of metal elements excluding Li, even when the Co content is suppressed, the combination of the above-noted features advantageously achieves improvement in the charge/discharge efficiency.

In the following, descriptions are given regarding an example non-aqueous electrolyte secondary battery using a positive electrode active material for non-aqueous electrolyte secondary batteries according to one aspect of the present disclosure.

A non-aqueous electrolyte secondary battery according to an example embodiment includes a positive electrode, a negative electrode, and a non-aqueous electrolyte. A separator is preferably provided between the positive electrode and the negative electrode. Specifically, the non-aqueous electrolyte secondary battery has a structure in which an outer casing has received therein a spiral-type electrode body, which is formed by winding the positive electrode and the negative electrode with a separator located therebetween, and the non-aqueous electrolyte. The electrode body is not limited to a spiral-type electrode body, and electrode bodies having other formats may alternatively be employed, such as a laminated type electrode body formed by laminating the positive electrode and the negative electrode via the separator. The format of the non-aqueous electrolyte secondary battery is not particularly limited, and examples thereof include a cylindrical type, a square type, a coin type, a button type, and a laminated type.

The positive electrode, the negative electrode, the non-aqueous electrolyte, and the separator used in the non-aqueous electrolyte secondary battery according to an example embodiment will now be described in detail.

<Positive Electrode>

The positive electrode is composed of a positive electrode current collector such as a metal foil, and a positive electrode active material layer formed on the positive electrode current collector. As the positive electrode current collector, it is possible to use a foil of a metal, such as aluminum, that is stable in the potential range of the positive electrode, a film having such a metal disposed on the surface layer, or the like. The positive electrode active material layer includes, for example, a positive electrode active material, a binder, a conductive material, and the like.

The positive electrode can be obtained by, for example, applying and drying a positive electrode mixture slurry containing the positive electrode active material, the binder, the conductive material, and the like on the positive electrode current collector to thereby form the positive electrode active material layer on the positive electrode current collector, and by rolling the positive electrode active material layer.

The positive electrode active material includes a lithium transition metal oxide having a layered structure and containing Ni, Nb, and an arbitrary element of Co. Hereinafter, the lithium transition metal oxide having a layered structure and containing Ni, Nb, and an arbitrary element of Co will be referred to as "the lithium transition metal oxide of the present embodiment".

Examples of the layered structure of the lithium transition metal oxide of the present embodiment include a layered structure belonging to the space group R-3m, and a layered structure belonging to the space group C2/m. Among these, the layered structure belonging to the space group R-3m is preferable in terms of achieving high battery capacity, stability of the layered structure, and the like.

While the ratio of Ni to the total amount of metal elements excluding Li in the lithium transition metal oxide of the present embodiment may be in the range of 90 mol% $\leq$ Ni < 100 mol%, in terms of improving the charge/discharge efficiency and the like, this ratio is preferably in the range of 92 mol% $\leq$ Ni $\leq$ 96 mol%. When the ratio of Ni is less than 90 mol%, it becomes difficult to achieve high battery capacity in the first place.

While the ratio of Nb to the total amount of metal elements excluding Li in the lithium transition metal oxide of the present embodiment may be in the range of 0 mol% < Nb $\leq$ 3 mol% in terms of improving the charge/discharge efficiency and the like, this ratio is preferably in the range of 0.2 mol% $\leq$ Nb $\leq$ 2.0 mol%, and more preferably in the range of 0.2 mol% $\leq$ Nb $\leq$ 1.5 mol%. When the Nb content exceeds 3 mol%, a large amount of unstable divalent Ni becomes present in the layered structure, so that the layered structure becomes unstable, leading to a decrease in the charge/discharge efficiency.

While the ratio of Co to the total amount of metal elements excluding Li in the lithium transition metal oxide of the present embodiment may be in the range of Co $\leq$ 2 mol%, in view of manufacturing costs, this ratio is preferably Co $\leq$ 1.0 mol%, and more preferably such that Co = 0.0 mol%.

The lithium transition metal oxide of the present embodiment may contain a metal element other than Li, Ni, Nb, and Co, which may be, for example, at least one metal element selected from Al, Fe, Mg, Si, Ti, Cr, Cu, Sn, Zr, Mn, Mo, Ta, W, Na, K, Ba, Sr, Bi, Be, Zn, Ca, and B. Among these, at least one metal element selected from Al, Mn, Ti, Si, and Fe is preferable in terms of improving the charge/discharge efficiency and the like, and Al is further preferable among these. For example, this another metal element may be uniformly dispersed in the layered structure of the lithium transition metal oxide of the present embodiment, or may be present in a part of the layered structure. Further, during manufacture of the lithium transition metal oxide of the present embodiment, a part of this another metal element included in the layered structure may be deposited on the particle surface of the lithium transition metal oxide of the present embodiment. Such deposited metal element also corresponds to the metal element constituting the lithium transition metal oxide of the present embodiment.

The content of an element constituting the lithium transition metal oxide of the present embodiment can be measured using devices such as an inductively coupled plasma atomic emission spectrometer (ICP-AES), an electron probe microanalyzer (EPMA), or an energy dispersive X-ray analyzer (EDX).

In the lithium transition metal oxide of the present embodiment, a metal element other than Li is present in the Li layer of the layered structure. In view of improving the charge/discharge efficiency and the like, the ratio of metal elements other than Li present in the Li layer of the layered structure is in the range from 0.9 mol% to 2.5 mol%, and preferably in the range from 0.9 mol% to 2 mol%, relative to the total amount of metal elements excluding Li in the lithium transition metal oxide. While the metal elements other than Li present in the Li layer of the layered structure are mainly Ni considering the ratio of the elements constituting the lithium transition metal oxide of the present embodiment, other metal elements may also be included.

The ratio of metal elements other than Li present in the Li layer of the layered structure can be obtained based on a result of Rietveld analysis performed on an X-ray diffraction pattern obtained by X-ray diffractometry measurement of the lithium transition metal oxide of the present embodiment.

The X-ray diffraction pattern is obtained by powder X-ray diffractometry under the following conditions using a powder X-ray diffractometer (manufactured by Rigaku Corporation, product name "RINT-TTR", using Cu-Kα radiation source).

Measurement range: 15~120°
Scan speed: 4 °/min
Analysis range: 30~120°
Background: B-spline
Profile function: Split pseudo-Voigt function
Binding conditions:

$$\mathrm{Li}\,(3a) + \mathrm{Ni}\,(3a) = 1$$

$$\mathrm{Ni}\,(3a) + \mathrm{Ni}\,(3b) = y$$

wherein y is the ratio of Ni to the total amount of metal elements
excluding Li in the lithium transition metal oxide ($0.90 \leq y < 1.00$) ICSD No.: 98-009-4814

Further, for the Rietveld analysis of the X-ray diffraction pattern, the Rietveld analysis software PDXL2 (Rigaku Corporation) is used.

In the lithium transition metal oxide of the present embodiment, in view of improving the charge/discharge efficiency and the like, the half width n of the diffraction peak of the (208) plane in the X-ray diffraction pattern obtained by the above-described X-ray diffractometry is in the range of $0.30° \leq n \leq 0.50°$, and preferably in the range of $0.30° \leq n \leq 0.45°$. When the half width n of the diffraction peak of the (208) plane is outside the above-noted range, fluctuations in the alignment between the Li layer and the transition metal layer of the layered structure are too small or too large, and stability of the layered structure becomes lower, causing a decrease in the charge/discharge efficiency.

In the lithium transition metal oxide of the present embodiment, the lattice constant a indicating the a-axis length of the crystal structure according to the X-ray diffraction pattern result obtained by the above-described X-ray diffractometry is preferably in the range of $2.870 \,\text{Å} \leq a \leq 2.877 \,\text{Å}$, and the lattice constant c indicating the c-axis length of the crystal structure is preferably in the range of $14.18 \,\text{Å} \leq c \leq 14.20 \,\text{Å}$. When the lattice constant a is smaller than 2.870 Å, as compared to a case where the above-noted range is satisfied, the interatomic distance in the crystal structure becomes small, resulting in an unstable structure, and the charge/discharge efficiency may become decreased. When the lattice constant a is larger than 2.877 Å, the interatomic distance in the crystal structure becomes large, resulting in an unstable structure, and the charge/discharge efficiency may become decreased as compared to a case where the above-noted range is satisfied. Further, when the lattice constant c is smaller than 14.18 Å, the interatomic distance in the crystal structure becomes small, resulting in an unstable structure, and the charge/discharge efficiency may become decreased as compared to a case where the above-noted range is satisfied. When the lattice constant c is larger than 14.21 Å, the interatomic distance in the crystal structure becomes large, resulting in an unstable structure, and the charge/discharge efficiency may become decreased as compared to a case where the above-noted range is satisfied.

In the lithium transition metal oxide of the present embodiment, the crystallite size s calculated by the Scherrer equation from the half width of the diffraction peak of the (104) plane in the X-ray diffraction pattern obtained by the above-described X-ray diffractometry is in the range of 400 Å ≤ s ≤ 600 Å, and preferably 400 Å ≤ s ≤ 550 Å. When the crystallite size s of the lithium transition metal oxide of the present embodiment is outside the above-noted range, stability of the layered structure becomes lower, and the charge/discharge efficiency may become decreased as compared to a case where the above-noted range is satisfied. The Scherrer equation is expressed by the following formula.

$$s = K\lambda / B \cos\theta$$

In this formula, s is the crystallite size, $\lambda$ is the wavelength of the X-ray, B is the half width of the diffraction peak of the (104) plane, $\theta$ is the diffraction angle (rad), and K is the Scherrer constant. In the present embodiment, K is 0.9.

The content of the lithium transition metal oxide of the present embodiment relative to the total mass of the positive electrode active material is, for example, preferably 90 % by mass or higher and preferably 99 % by mass or higher, in terms of improving the charge/discharge efficiency.

Further, the positive electrode active material of the present embodiment may contain another lithium transition metal oxide in addition to the lithium transition metal oxide of the present embodiment. This another lithium transition metal oxide may be, for example, a lithium transition metal oxide having a Ni content in the range from 0 mol% to less than 90 mol%.

An example method for producing the lithium transition metal oxide of the present embodiment will now be described.

The method for producing the lithium transition metal oxide of the present embodiment includes, for example, a multi-step firing process including: a first firing step of firing a mixture including a compound containing Ni and an arbitrary metal, a Li compound, and a Nb-containing compound, in a firing furnace under an oxygen stream at a first heating rate up to a first set temperature no lower than 450 °C and no higher than 680 °C; and a second firing step of firing the fired product obtained by the first firing step, in a firing furnace under an oxygen stream at a second heating rate up to a second set temperature exceeding 680 °C and no higher than 800 °C. Here, the first heating rate is in a range from 1.5 °C/min to 5.5 °C/min. The second heating rate is lower than the first heating rate, and is in a range from 0.1 °C/min to 3.5 °C/min. In the lithium transition metal oxide of the present embodiment finally obtained by such multi-step firing, the respective parameters such as the ratio of metal elements other than Li present in the Li layer of the layered structure, the half width n of the diffraction peak of the (208) plane, the lattice constant a, the lattice constant c, and the crystallite size s can be adjusted to within the above-defined ranges. In the following, details of the first firing step and the second firing step will be described.

The compound containing Ni and an arbitrary metal used in the first firing step is, for example, an oxide containing Ni and an arbitrary metal (Co, Al, etc.), or the like. In order to obtain this oxide, for example, an alkaline solution of sodium hydroxide or the like is added dropwise into a metal salt solution containing Ni and the arbitrary metal while stirring, to thereby adjust the pH of the metal salt solution toward the alkaline side (for example, 8.5~14.0), as a result of which precipitation (coprecipitation) occurs in the form of a composite hydroxide containing Ni and the arbitrary metal, and this composite hydroxide is fired to obtain the oxide. While the firing temperature is not particularly limited, it is, for example, in the range from 400 °C to 600 °C.

The Li compound used in the first firing step is, for example, lithium hydroxide, lithium carbonate, or the like. The Nb-containing compound used in the first firing step is, for example, niobium oxide, lithium niobate, niobium chloride, or the like, and niobium oxide is particularly preferable. By using these raw materials, a lithium transition metal oxide having high battery performance can be obtained.

The compound containing Ni and an arbitrary metal used in the method for producing the lithium transition metal oxide of the present embodiment preferably does not contain Nb, and the Nb-containing compound preferably does not contain other metal elements such as Ni. By using these raw materials, a lithium transition metal oxide having high battery performance can be obtained.

In the mixture used in the first firing step, the mixing ratio of the compound containing Ni and an arbitrary metal, the Li compound, and the Nb-containing compound may be set as appropriate, but for example, in view of facilitating adjustment of the respective parameters such as the ratio of metal elements other than Li present in the Li layer of the layered structure, the half width n of the diffraction peak of the (208) plane, the lattice constant a, the lattice constant c, and the crystallite size s to within the above-defined ranges, it is preferable that the molar ratio of metal elements excluding Li relative to Li is set in the range from 1:0.98 to 1:1.08.

The first set temperature in the first firing step may be in the range from 450 °C to 680 °C in view of adjusting the above parameters of the lithium transition metal oxide to within the above-defined ranges, but is preferably in the range from 550 °C to 680 °C. The first heating rate in the first firing step may be in the range from 1.5 °C/min to 5.5 °C/min in view of adjusting the above parameters of the lithium transition metal oxide to within the above-defined ranges, but is preferably in the range from 2.0 °C/min to 5.0 °C/min. A plurality of first heating rates may be set for respective temperature regions so long as those first heating rates are within the above-noted range. The firing start temperature (initial temperature) of the first firing step is, for example, in the range from room temperature to 200 °C.

A hold time for the first set temperature in the first firing step is preferably in the range from 0 hour to 5 hours, and more preferably in the range from 0 hour to 3 hours, in view of adjusting the above parameters of the lithium transition metal oxide to within the above-defined ranges. The hold time for the first set temperature is a period of time during which the first set temperature is maintained after the first set temperature is reached.

The second set temperature in the second firing step may be in the range from above 680 °C to 800 °C in view of adjusting the above parameters of the lithium transition metal oxide to within the above-defined ranges, but is preferably in the range from 680 °C to 750 °C. In view of adjusting the above parameters of the lithium transition metal oxide to within the above-defined ranges, the second heating rate in the second firing step is lower than the first heating rate and may be in the range from 0.1 °C/min to 3.5 °C/min, but is preferably in the range from 0.2 °C/min to 2.5 °C/min. A plurality of second heating rates may be set for respective temperature regions so long as those second heating rates are within the above-noted range. For example, when the first set temperature is below 680 °C, the second heating rate may be set dividedly to a heating rate A which applies from the first set temperature to 680 °C, and to a heating rate B which applies from 680 °C to the second set temperature. The heating rate B for the latter stage is preferably lower than the heating rate A for the former stage.

A hold time for the second set temperature in the second firing step is preferably in the range from 1 hour to 10 hours, and more preferably in the range from 1 hour to 5 hours, in view of adjusting the above parameters of the lithium transition metal oxide to within the above-defined ranges. The hold time for the second set temperature is a period of time during which the second set temperature is maintained after the second set temperature is reached.

The oxygen stream in the multi-step firing process is for example such that, in view of adjusting the above parameters of the lithium transition metal oxide to within the above-defined ranges, the oxygen concentration in the oxygen stream is preferably 60 % or higher, and the flow rate of the oxygen stream is preferably in the range from 0.2 mL/min to 4 mL/min per 10 cm$^3$ of the firing furnace and 0.3 L/min or higher per 1 kg of the mixture. Further, the maximum pressure applied to the interior of the firing furnace is preferably in the range from 0.1 kPa to 1.0 kPa in addition to the pressure outside the firing furnace.

Next, other materials contained in the positive electrode active material layer will be described.

Examples of the conductive material contained in the positive electrode active material layer include carbon powder such as carbon black, acetylene black, Ketjen black, and graphite. These may be used alone or as a combination of two or more thereof.

Examples of the binder contained in the positive electrode active material layer include fluorine-based polymers and rubber-based polymers. Examples of the fluorine-based polymers include polytetrafluoroethylene (PTFE), polyvinylidene fluoride (PVdF), and modified products thereof. Examples of the rubber-based polymers include ethylene-propylene-isoprene copolymer and ethylene-propylene-butadiene copolymer. These may be used alone or as a combination of two or more thereof.

<Negative Electrode>

The negative electrode is composed of a negative electrode current collector such as a metal foil, and a negative electrode active material layer formed on the negative electrode current collector. As the negative electrode current collector, it is possible to use a foil of a metal, such as copper, that is stable in the potential range of the negative electrode, a film having such a metal disposed on the surface layer, or the like. The negative electrode active material layer includes, for example, a negative electrode active material, a binder, a thickener, and the like.

The negative electrode can be obtained by, for example, applying and drying a negative electrode mixture slurry containing the negative electrode active material, the binder, and the thickener on the negative electrode current collector to thereby form the negative electrode active material layer on the negative electrode current collector, and by rolling the negative electrode active material layer.

The negative electrode active material contained in the negative electrode active material layer is not particularly limited so long as the material is capable of occluding and releasing lithium ions, and may be, for example, a carbon material, a metal capable of forming an alloy with lithium, an alloy compound containing such a metal, or the like. As the carbon material, graphite such as natural graphite, non-graphitizable carbon, and artificial graphite, coke, and the like can be used. Examples of the alloy compound include those containing at least one metal capable of forming an alloy with lithium. The element capable of forming an alloy with lithium is preferably silicon or tin, and silicon oxide, tin oxide, and the like in which such elements are bonded to oxygen can also be used. Further, a mixture of the above-noted carbon material and a compound of silicon or tin can be used. In addition to the above, it is also possible to use a material in which the charge/discharge potential relative to metallic lithium such as lithium titanate is higher than that of a carbon material or the like.

As the binder contained in the negative electrode active material layer, while a fluorine-based polymer, a rubber-based polymer, or the like can for example be used as in the case of the positive electrode, styrene-butadiene copolymer (SBR) or a modified product thereof may also be used. As the binder contained in the negative electrode active material layer, it is possible to use fluorine resin, PAN, polyimide resin, acrylic resin, polyolefin resin, or the like, as in the case of the positive electrode. When preparing a negative electrode mixture slurry using an aqueous solvent, it is preferable to use styrene-butadiene rubber (SBR), CMC or a salt thereof, polyacrylic acid (PAA) or a salt thereof (PAA-Na, PAA-K, etc.; it may be a partially neutralized salt), polyvinyl alcohol (PVA), or the like.

Examples of the thickener contained in the negative electrode active material layer include carboxymethylcellulose (CMC) and polyethylene oxide (PEO). These may be used alone or as a combination of two or more thereof.

<Non-Aqueous Electrolyte>

The non-aqueous electrolyte contains a non-aqueous solvent and an electrolyte salt dissolved in the non-aqueous solvent. The non-aqueous electrolyte is not limited to a liquid electrolyte (non-aqueous electrolyte solution), and may be a solid electrolyte using a gel polymer or the like. As the non-aqueous solvent, it is possible to use, for example, esters, ethers, nitriles such as acetonitrile, amides such as dimethylformamide, and a mixed solvent containing two or more of the foregoing. The non-aqueous solvent may contain a halogen-substituted product obtained by substituting at least a part of hydrogens in these solvents with a halogen atom such as fluorine.

Examples of the above-noted esters include: cyclic carbonates such as ethylene carbonate (EC), propylene carbonate (PC) and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as $\gamma$-butyrolactone (GBL) and $\gamma$-valerolactone (GVL); and chain carboxylic acid esters such as methyl acetate, ethyl acetate, propyl acetate, methyl propionate (MP), ethyl propionate, and $\gamma$-butyrolactone.

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the above-noted halogen-substituted product, it is preferable to use fluorinated cyclic carbonates such as fluoroethylene carbonate (FEC); fluorinated chain carbonates; fluorinated chain carboxylic acid esters such as fluoro methyl propionate (FMP); and the like.

The electrolyte salt is preferably lithium salt. Examples of lithium salt include $LiBF_4$, $LiClO_4$, $LiPF_6$, $LiAsF_6$, $LiSbF_6$, $LiAlCl_4$, LiSCN, $LiCF_3SO3$, $UCF_3CO_2$, $Li(P(C_2O_4)F_4)$, $LiPF_{6-x}(C_nF_{2n+1})_x$ (where $1 < x < 6$, and n is 1 or 2), $LiB_{10}Cl_{10}$, LiCl, LiBr, LiI, lithium chloroborane, lower aliphatic lithium carboxylate, borates such as $Li_2B_4O_7$ and $Li(B(C_2O_4)F_2)$, and imide salts such as $LiN(SO_2CF_3)_2$ and $LiN(C_1F_{2l+1}SO_2)(C_mF_{2m+1}SO_2)$ (where 1 and m are each an integer of 0 or greater). As the lithium salt, a single kind among the above may be used alone, or a plurality of kinds may be mixed and used. Among the foregoing, it is preferable to use $LiPF_6$ in view of ion conductivity, electrochemical stability, and the like. The concentration of lithium salt is preferably in the range from 0.8 mol to 1.8 mol per 1 liter of the non-aqueous solvent.

<Separator>

As the separator, for example, a porous sheet having ion permeability and insulation property is used. Specific examples of the porous sheet include a microporous thin film, woven fabric, and non-woven fabric. As the material of the separator, olefin resin such as polyethylene and polypropylene, cellulose, and the like are suitable. The separator may be a laminated body having a cellulose fiber layer and a thermoplastic resin fiber layer made of an olefin resin or the like, and a separator having an aramid resin or the like applied to its surface may be used. At an interface between the separator and at least one of the positive electrode and the negative electrode, a filler layer containing an inorganic filler may be formed. Examples of the inorganic filler include oxides or phosphate compounds containing at least one of titanium (Ti), aluminum (Al), silicon (Si), and magnesium (Mg), and the foregoing with its surface treated with a hydroxide or the like. The filler layer can be formed by, for example, applying a slurry containing the filler to a surface of the positive electrode, the negative electrode, or the separator.

EXAMPLES

While the present invention will be further described below by reference to examples, the present invention is not limited to those examples.

<Example 1>

[Fabrication of Positive Electrode Active Material]

A composite oxide containing Ni, Co, and Al ($Ni_{0.943}Co_{0.01}Al_{0.047}O_2$), LiOH, $LiNbO_3$, and SiO were mixed so that the molar ratio of the total amount of Ni, Nb, Co, Al and Si relative to Li becomes 1:1.08, and a mixture was thereby obtained. This mixture was put into a firing furnace, and was fired under an oxygen stream having an oxygen concentration of 95% (with a flow rate of 2 mL/min per 10 $cm^3$ and 5 L/min per 1kg of the mixture) at a heating rate of 2.0 °C/min from room temperature to 650 °C, and subsequently at a heating rate of 0.5 °C/min from 650 °C to 710 °C. The fired product was washed with water, and a lithium transition metal oxide was thereby obtained. The ratios of Ni, Nb, Co, Al, and Si of the obtained lithium transition metal oxide were measured, and the results showed that the ratio of Ni was 91 mol%, the ratio of Nb was 3 mol%, the ratio of Co was 1 mol%, the ratio of Al was 4.5 mol%, and the ratio of Si was 0.5 mol%.
Further, the lithium transition metal oxide of Example 1 was subjected to powder X-ray diffractometry under the above-described conditions to obtain an X-ray diffraction pattern. As a result, diffraction lines showing a layered structure were observed. The ratio of metal elements other than Li present in the Li layer was 1.7 mol%, and the half width of the diffraction peak of the (208) plane was 0.44°. The lattice constant a was 2.876 Å, the lattice constant c was 14.21 Å, and the crystallite size s was 390 Å. This product was used as the positive electrode active material of Example 1.

<Example 2>

A lithium transition metal oxide was prepared in the same manner as in Example 1 except that a composite oxide containing Ni, Mn, Co, and Al ($Ni_{0.925}Al_{0.05}Mn_{0.025}O_2$), LiOH, $Nb_2O_5$, and SiO were mixed so that the molar ratio of the total amount of Ni, Nb, Al, Mn and Si relative to Li becomes 1:1.03, and also except that the firing was performed at a heating rate of 2.0 °C/min from room temperature to 650 °C, and subsequently at a heating rate of 0.5 °C/min from 650 °C to 720 °C. The ratios of Ni, Nb, Al, Mn, and Si of the obtained lithium transition metal oxide were measured, and the results showed that the ratio of Ni was 91.8 mol%, the ratio of Nb was 0.2 mol%, the ratio of Al was 5 mol%, the ratio of Mn was 2.5 mol%, and the ratio of Si was 0.5 mol%.
Further, the lithium transition metal oxide of Example 2 was subjected to powder X-ray diffractometry in the same manner as in Example 1. As a result, diffraction lines showing a layered structure were observed. The ratio of metal elements other than Li present in the Li layer was 2.2 mol%, and the half width of the diffraction peak of the (208) plane was 0.31°. The lattice constant a was 2.875 Å, the lattice constant c was 14.20 Å, and the crystallite size s was 619 Å. This product was used as the positive electrode active material of Example 2.

<Example 3>

A lithium transition metal oxide was prepared in the same manner as in Example 1 except that a composite oxide containing Ni, Co, and Al ($Ni_{0.938}Co_{0.015}Al_{0.047}O_2$), LiOH, $Nb_2O_5$, and $SiO_2$ were mixed so that the molar ratio of the total amount of Ni, Nb, Co, Al, and Si relative to Li becomes 1:1.08, and also except that the firing was performed under an oxygen stream having an oxygen concentration of 95% and a flow rate of 10 L/min per 1kg of the mixture. The ratios of Ni, Nb, Co, Al, and Si of the obtained lithium transition metal oxide were measured, and the results showed that the ratio of Ni was 92.6 mol%, the ratio of Nb was 1 mol%, the ratio of Co was 1.5 mol%, the ratio of Al was 4.6 mol%, and the ratio of Si was 0.3 mol%.
Further, the lithium transition metal oxide of Example 3 was subjected to powder X-ray diffractometry in the same manner as in Example 1. As a result, diffraction lines showing a layered structure were observed. The ratio of metal elements other than Li present in the Li layer was 1.6 mol%, and the half width of the diffraction peak of the (208) plane was 0.49°. The lattice constant a was 2.872 Å, the lattice constant c was 14.19 Å, and the crystallite size s was 428 Å. This product was used as the positive electrode active material of Example 3.

<Example 4>

A lithium transition metal oxide was prepared in the same manner as in Example 1 except that a composite oxide containing Ni, Co, Al, and Mn ($Ni_{1.938}Co_{0.007}Al_{0.045}Mn_{0.001}O_2$), LiOH, $Nb_2O_5$, and $Fe_2O_3$ were mixed so that the molar ratio of the total amount of Ni, Nb, Co, Al, Mn and Fe relative to Li becomes 1:1.08, and also except that the firing was performed at a heating rate of 4.0 °C/min from room temperature to 670 °C, and subsequently at a heating rate of 2.5 °C/min from 670 °C to 730 °C. The ratios of Ni, Nb, Co, Al, Mn, and Fe of the obtained lithium transition metal oxide were measured, and the results showed that the ratio of Ni was 92.5 mol%, the ratio of Nb was 0.5 mol%, the ratio of Co was 0.7 mol%, the ratio of Al was 4.5 mol%, the ratio of Mn was 1.0 mol%, and the ratio of Fe was 0.8 mol%.

Further, the lithium transition metal oxide of Example 4 was subjected to powder X-ray diffractometry in the same manner as in Example 1. As a result, diffraction lines showing a layered structure were observed. The ratio of metal elements other than Li present in the Li layer was 1.8 mol%, and the half width of the diffraction peak of the (208) plane was 0.40°. The lattice constant a was 2.872 Å, the lattice constant c was 14.20 Å, and the crystallite size s was 442 Å. This product was used as the positive electrode active material of Example 4.

<Example 5>

A lithium transition metal oxide was prepared in the same manner as in Example 1 except that a composite oxide containing Ni, Co, and Al ($Ni_{0.952}Co_{0.002}Al_{0.046}O_2$), LiOH, $Nb_2O_5$, SiO, and $Ti(OH)_4$ were mixed so that the molar ratio of the total amount of Ni, Nb, Co, Al, Ti, and Si relative to Li becomes 1:1.08, and also except that the firing was performed at a heating rate of 2.0 °C/min from room temperature to 650 °C, and subsequently at a heating rate of 0.5 °C/min from 650 °C to 715 °C. The ratios of Ni, Nb, Co, Al, Ti, and Si of the obtained lithium transition metal oxide were measured, and the results showed that the ratio of Ni was 93.0 mol%, the ratio of Nb was 1.5 mol%, the ratio of Co was 0.2 mol%, the ratio of Al was 4.5 mol%, the ratio of Ti was 0.5 mol%, and the ratio of Si was 0.3 mol%.

Further, the lithium transition metal oxide of Example 5 was subjected to powder X-ray diffractometry in the same manner as in Example 1. As a result, diffraction lines showing a layered structure were observed. The ratio of metal elements other than Li present in the Li layer was 1.8 mol%, and the half width of the diffraction peak of the (208) plane was 0.46°. The lattice constant a was 2.874 Å, the lattice constant c was 14.19 Å, and the crystallite size s was 485 Å. This product was used as the positive electrode active material of Example 5.

<Example 6>

A lithium transition metal oxide was prepared in the same manner as in Example 1 except that a composite oxide containing Ni, Co, and Al ($Ni_{0.935}Co_{0.02}Al_{0.045}O_2$), LiOH, and $Nb_2O_5$ were mixed so that the molar ratio of the total amount of Ni, Nb, Co, and Al relative to Li becomes 1:1.05. The ratios of Ni, Nb, Co, and Al of the obtained lithium transition metal oxide were measured, and the results showed that the ratio of Ni was 93.0 mol%, the ratio of Nb was 0.5 mol%, the ratio of Co was 2.0 mol%, and the ratio of Al was 4.5 mol%.

Further, the lithium transition metal oxide of Example 6 was subjected to powder X-ray diffractometry in the same manner as in Example 1. As a result, diffraction lines showing a layered structure were observed. The ratio of metal elements other than Li present in the Li layer was 1.4 mol%, and the half width of the diffraction peak of the (208) plane was 0.49°. The lattice constant a was 2.872 Å, the lattice constant c was 14.20 Å, and the crystallite size s was 499 Å. This product was used as the positive electrode active material of Example 6.

<Example 7>

A lithium transition metal oxide was prepared in the same manner as in Example 1 except that a composite oxide containing Ni, Co, and Al ($Ni_{0.945}Co_{0.003}Al_{0.052}O_2$), LiOH, $Nb_2O_5$, and SiO were mixed so that the molar ratio of the total amount of Ni, Nb, Co, Al, and Si relative to Li becomes 1:1.08, and also except that the firing was performed at a heating rate of 1.5 °C/min from room temperature to 650 °C, and subsequently at a heating rate of 0.5 °C/min from 650 °C to 710 °C. The ratios of Ni, Nb, Co, Al, and Si of the obtained lithium transition metal oxide were measured, and the results showed that the ratio of Ni was 93.2 mol%, the ratio of Nb was 0.8 mol%, the ratio of Co was 0.3 mol%, the ratio of Al was 5.2 mol%, and the ratio of Si was 0.5 mol%.

Further, the lithium transition metal oxide of Example 7 was subjected to powder X-ray diffractometry in the same manner as in Example 1. As a result, diffraction lines showing a layered structure were observed. The ratio of metal elements other than Li present in the Li layer was 1.8 mol%, and the half width of the diffraction peak of the (208) plane was 0.33°. The lattice constant a was 2.872 Å, the lattice constant c was 14.20 Å, and the crystallite size s was 438 Å. This product was used as the positive electrode active material of Example 7.

<Example 8>

A lithium transition metal oxide was prepared in the same manner as in Example 1 except that a composite oxide containing Ni, Co, and Al ($Ni_{0.95}Co_{0.005}Al_{0.045}O_2$), LiOH, $Nb_2O_5$, and $Fe_2O_3$ were mixed so that the molar ratio of the total amount of Ni, Nb, Co, Al, and Fe relative to Li becomes 1:1.03, and also except that the firing was performed at a heating rate of 2.0 °C/min from room temperature to 650 °C, and subsequently at a heating rate of 0.5 °C/min from 650 °C to 700 °C. The ratios of Ni, Nb, Co, Al, and Fe of the obtained lithium transition metal oxide were measured, and the results showed that the ratio of Ni was 93.5 mol%, the ratio of Nb was 0.5 mol%, the ratio of Co was 0.5 mol%, the ratio of Al was 4.5 mol%, and the ratio of Fe was 1.0 mol%.

Further, the lithium transition metal oxide of Example 8 was subjected to powder X-ray diffractometry in the same manner as in Example 1. As a result, diffraction lines showing a layered structure were observed. The ratio of metal elements other than Li present in the Li layer was 1.2 mol%, and the half width of the diffraction peak of the (208) plane was 0.45°. The lattice constant a was 2.872 Å, the lattice constant c was 14.20 Å, and the crystallite size s was 515 Å. This product was used as the positive electrode active material of Example 8.

<Example 9>

A lithium transition metal oxide was prepared in the same manner as in Example 1 except that a composite oxide containing Ni and Al ($Ni_{0.955}Al_{0.045}O_2$), LiOH, and $Nb_2O_5$ were mixed so that the molar ratio of the total amount of Ni, Nb, and Al relative to Li becomes 1:1.05, and also except that the firing was performed at a heating rate of 2.0 °C/min from room temperature to 650 °C, and subsequently at a heating rate of 0.5 °C/min from 650 °C to 690 °C. The ratios of Ni, Nb, and Al of the obtained lithium transition metal oxide were measured, and the results showed that the ratio of Ni was 95.0 mol%, the ratio of Nb was 0.5 mol%, and the ratio of Al was 4.5 mol%.

Further, the lithium transition metal oxide of Example 9 was subjected to powder X-ray diffractometry in the same manner as in Example 1. As a result, diffraction lines showing a layered structure were observed. The ratio of metal elements other than Li present in the Li layer was 1.5 mol%, and the half width of the diffraction peak of the (208) plane was 0.44°. The lattice constant a was 2.874 Å, the lattice constant c was 14.21 Å, and the crystallite size s was 520 Å. This product was used as the positive electrode active material of Example 9.

<Comparative Example 1>

A lithium transition metal oxide was prepared in the same manner as in Example 1 except that a composite oxide containing Ni, Co, Al, and Mn ($Ni_{0.92}Co_{0.005}Al_{0.05}Mn_{0.025}O_2$) and LiOH were mixed so that the molar ratio of the total amount of Ni, Co, Al, and Mn relative to Li becomes 1:1.03. The ratios of Ni, Co, Al, and Mn of the obtained lithium transition metal oxide were measured, and the results showed that the ratio of Ni was 92.0 mol%, the ratio of Co was 0.5 mol%, the ratio of Al was 5.0 mol%, and the ratio of Mn was 2.5 mol%.

Further, the lithium transition metal oxide of Comparative Example 1 was subjected to powder X-ray diffractometry in the same manner as in Example 1. As a result, diffraction lines showing a layered structure were observed. The ratio of metal elements other than Li present in the Li layer was 2.1 mol%, and the half width of the diffraction peak of the (208) plane was 0.31°. The lattice constant a was 2.875 Å, the lattice constant c was 14.21 Å, and the crystallite size s was 629 Å. This product was used as the positive electrode active material of Comparative Example 1.

<Comparative Example 2>

A lithium transition metal oxide was prepared in the same manner as in Example 1 except that a composite oxide containing Ni, Co, Al, and Mn ($Ni_{0.925}Co_{0.01}Al_{0.055}Mn_{0.01}O_2$), LiOH, and $Nb_2O_5$ were mixed so that the molar ratio of the total amount of Ni, Nb, Co, Al, and Mn relative to Li becomes 1:1.05, and also except that the firing was performed under an oxygen stream having an oxygen concentration of 95% and a flow rate of 0.1 L/min per 1kg of the mixture. The ratios of Ni, Nb, Co, Al, and Mn of the obtained lithium transition metal oxide were measured, and the results showed that the ratio of Ni was 92.0 mol%, the ratio of Nb was 0.5 mol%, the ratio of Co was 1.0 mol%, the ratio of Al was 5.5 mol%, and the ratio of Mn was 1.0 mol%.

Further, the lithium transition metal oxide of Comparative Example 2 was subjected to powder X-ray diffractometry in the same manner as in Example 1. As a result, diffraction lines showing a layered structure were observed. The ratio of metal elements other than Li present in the Li layer was 2.8 mol%, and the half width of the diffraction peak of the (208) plane was 0.36°. The lattice constant a was 2.872 Å, the lattice constant c was 14.20 Å, and the crystallite size s was 494 Å. This product was used as the positive electrode active material of Comparative Example 2.

<Comparative Example 3>

A lithium transition metal oxide was prepared in the same manner as in Example 1 except that a composite oxide containing Ni, Co, Al, and Mn ($Ni_{0.925}Co_{0.01}Al_{0.055}Mn_{0.01}O_2$), LiOH, and $Nb_2O_5$ were mixed so that the molar ratio of the total amount of Ni, Nb, Co, Al, and Mn relative to Li becomes 1:1.01, and also except that the firing was performed at a heating rate of 4.0 °C/min from room temperature to 600 °C, and subsequently at a heating rate of 4.0 °C/min from 650 °C to 700 °C. The ratios of Ni, Nb, Co, Al, and Mn of the obtained lithium transition metal oxide were measured, and the results showed that the ratio of Ni was 92.0 mol%, the ratio of Nb was 0.5 mol%, the ratio of Co was 1.0 mol%, the ratio of Al was 5.5 mol%, and the ratio of Mn was 1.0 mol%.

Further, the lithium transition metal oxide of Comparative Example 3 was subjected to powder X-ray diffractometry in the same manner as in Example 1. As a result, diffraction lines showing a layered structure were observed. The ratio of metal elements other than Li present in the Li layer was 2.2 mol%, and the half width of the diffraction peak of the (208) plane was 0.53°. The lattice constant a was 2.872 Å, the lattice constant c was 14.20 Å, and the crystallite size s was 481 Å. This product was used as the positive electrode active material of Comparative Example 3.

<Comparative Example 4>

A lithium transition metal oxide was prepared in the same manner as in Example 1 except that a composite oxide containing Ni, Co, and Al ($Ni_{0.925}Co_{0.02}Al_{0.055}O_2$) and LiOH were mixed so that the molar ratio of the total amount of Ni, Co, and Al relative to Li becomes 1:1.03, and also except that the firing was performed at a heating rate of 2.0 °C/min from room temperature to 670 °C, and subsequently at a heating rate of 0.5 °C/min from 670 °C to 730 °C. The ratios of Ni, Co, and Al of the obtained lithium transition metal oxide were measured, and the results showed that the ratio of Ni was 92.5 mol%, the ratio of Co was 2.0 mol%, and the ratio of Al was 5.5 mol%.

Further, the lithium transition metal oxide of Comparative Example 4 was subjected to powder X-ray diffractometry in the same manner as in Example 1. As a result, diffraction lines showing a layered structure were observed. The ratio of metal elements other than Li present in the Li layer was 1.4 mol%, and the half width of the diffraction peak of the (208) plane was 0.38°. The lattice constant a was 2.872 Å, the lattice constant c was 14.19 Å, and the crystallite size s was 576 Å. This product was used as the positive electrode active material of Comparative Example 4.

<Comparative Example 5>

A lithium transition metal oxide was prepared in the same manner as in Example 1 except that a composite oxide containing Ni, Co, and Al ($Ni_{0.945}Co_{0.01}Al_{0.045}O_2$), LiOH, $Nb_2O_5$, and $Ti(OH)_4$ were mixed so that the molar ratio of the total amount of Ni, Nb, Co, Al, and Ti relative to Li becomes 1:1. The ratios of Ni, Nb, Co, Al, and Ti of the obtained lithium transition metal oxide were measured, and the results showed that the ratio of Ni was 93.5 mol%, the ratio of Nb was 0.5 mol%, the ratio of Co was 1.0 mol%, the ratio of Al was 4.5 mol%, and the ratio of Ti was 0.5 mol%.

Further, the lithium transition metal oxide of Comparative Example 5 was subjected to powder X-ray diffractometry in the same manner as in Example 1. As a result, diffraction lines showing a layered structure were observed. The ratio of metal elements other than Li present in the Li layer was 0.8 mol%, and the half width of the diffraction peak of the (208) plane was 0.37°. The lattice constant a was 2.874 Å, the lattice constant c was 14.19 Å, and the crystallite size s was 617 Å. This product was used as the positive electrode active material of Comparative Example 5.

<Comparative Example 6>

A lithium transition metal oxide was prepared in the same manner as in Example 1 except that a composite oxide containing Ni, Co, and Al ($Ni_{0.945}Co_{0.01}Al_{0.045}O_2$), LiOH, and $Nb_2O_5$ were mixed so that the molar ratio of the total amount of Ni, Nb, Co, and Al relative to Li becomes 1:1.05, and also except that the firing was performed at a heating rate of 1.0 °C/min from room temperature to 650 °C, and subsequently at a heating rate of 0.5 °C/min from 650 °C to 730 °C. The ratios of Ni, Nb, Co, and Al of the obtained lithium transition metal oxide were measured, and the results showed that the ratio of Ni was 94.0 mol%, the ratio of Nb was 0.5 mol%, the ratio of Co was 1.0 mol%, and the ratio of Al was 4.5 mol%.

Further, the lithium transition metal oxide of Comparative Example 6 was subjected to powder X-ray diffractometry in the same manner as in Example 1. As a result, diffraction lines showing a layered structure were observed. The ratio of metal elements other than Li present in the Li layer was 1.7 mol%, and the half width of the diffraction peak of the (208) plane was 0.27°. The lattice constant a was 2.874 Å, the lattice constant c was 14.20 Å, and the crystallite size s was 593 Å. This product was used as the positive electrode active material of Comparative Example 6.

<Comparative Example 7>

A lithium transition metal oxide was prepared in the same manner as in Example 1 except that a composite oxide containing Ni and Al ($M_{0.955}Al_{0.045}O_2$) and LiOH were mixed so that the molar ratio of the total amount of Ni and Al relative relative to Li becomes 1:1.03, and also except that the firing was performed at a heating rate of 2.0 °C/min from room temperature to 650 °C, and subsequently at a heating rate of 0.5 °C/min from 650 °C to 700 °C. The ratios of Ni and Al of the obtained lithium transition metal oxide were measured, and the results showed that the ratio of Ni was 95.5 mol%, and the ratio of Al was 4.5 mol%.

Further, the lithium transition metal oxide of Comparative Example 7 was subjected to powder X-ray diffractometry in the same manner as in Example 1. As a result, diffraction lines showing a layered structure were observed. The ratio of metal elements other than Li present in the Li layer was 1.7 mol%, and the half width of the diffraction peak of the (208) plane was 0.33°. The lattice constant a was 2.875 Å, the lattice constant c was 14.20 Å, and the crystallite size s was 410 Å. This product was used as the positive electrode active material of Comparative Example 7.

[Fabrication of Positive Electrode]

95 parts by mass of the positive electrode active material of Example 1, 3 parts by mass of acetylene black serving as the conductive material, and 2 parts by mass of polyvinylidene fluoride serving as the binder were mixed together. This mixture was kneaded using a kneader (T.K. HIVIS MIX, manufactured by PRIMIX Corporation) to prepare a positive electrode mixture slurry. Subsequently, the positive electrode mixture slurry was applied to an aluminum foil having a thickness of 15 μm, and the applied film was dried to form a positive electrode active material layer on the aluminum foil. This product was used as the positive electrode of Example 1.

[Preparation of Non-Aqueous Electrolyte]

Ethylene carbonate (EC), methyl ethyl carbonate (MEC), and dimethyl carbonate (DMC) were mixed at a volume ratio of 3:3:4. Into this mixed solvent, lithium hexafluorophosphate ($LiPF_6$) was dissolved to attain a concentration of 1.2 mol/liter, and a non-aqueous electrolyte was thereby prepared.

[Fabrication of Test Cell]

The positive electrode of Example 1 and the negative electrode made of lithium metal foil were laminated facing each other via a separator, and this laminated product was wound to form an electrode body. Subsequently, the electrode body and the non-aqueous electrolyte were inserted into an aluminum outer casing to form a test cell.

Test cells were fabricated in the same manner also for Examples 2 to 9 and Comparative Examples 1 to 7.

[Evaluation of Charge/Discharge Efficiency]

Regarding the above test cells (having cell capacity of 60 mAh), under an ambient temperature of 25 °C, the test cells of the respective Examples and Comparative Examples were charged with a constant current of 12 mA until the battery voltage reached 4.3 V, subsequently charged with a constant voltage of 4.3V until the current value reached 0.6 mA, and then discharged at a constant current of 12mA until the battery voltage reached 2.5V, to thereby obtain charge/discharge efficiency. The results are shown in Table 1.

$$\text{Charge/discharge efficiency (\%)} = (\text{Initial discharge capacity} \,/\, \text{Initial charge capacity}) \times 100$$

[Table 1]

| | Lithium transition metal oxide | | | | | | | | | | Battery characteristic |
| --- | --- | --- | --- | --- | --- | --- | --- | --- | --- | --- | --- |
| | Element content (mol%) | | | | | | | | Amount of otherelements present in Li layer (mol%) | 208 plane half width (°) | Charge/ discharge efficiency |
| | Ni | Nb | Co | Al | Mn | Ti | Si | Fe | | | |
| Example 1 | 91.0 | 3.0 | 1.0 | 4.5 | 0.0 | 0.0 | 0.5 | 0.0 | 1.7 | 0.44 | 88.5 % |
| Example 2 | 91.8 | 0.2 | 0.0 | 5.0 | 2.5 | 0.0 | 0.5 | 0.0 | 2.2 | 0.31 | 89.7 % |
| Example 3 | 92.6 | 1.0 | 1.5 | 4.6 | 0.0 | 0.0 | 0.3 | 0.0 | 1.6 | 0.49 | 86.6 % |
| Example 4 | 92.5 | 0.5 | 0.7 | 4.5 | 1.0 | 0.0 | 0.0 | 0.8 | 1.8 | 0.40 | 88.8 % |

(continued)

| | Lithium transition metal oxide | | | | | | | | | | Battery characteristic |
| --- | --- | --- | --- | --- | --- | --- | --- | --- | --- | --- | --- |
| | Element content (mol%) | | | | | | | | Amount of otherelements present in Li layer (mol%) | 208 plane half width (°) | Charge/ discharge efficiency |
| | Ni | Nb | Co | Al | Mn | Ti | Si | Fe | | | |
| Example 5 | 93.0 | 1.5 | 0.2 | 4.5 | 0.0 | 0.5 | 0.3 | 0.0 | 1.8 | 0.46 | 90.5 % |
| Example 6 | 93.0 | 0.5 | 2.0 | 4.5 | 0.0 | 0.0 | 0.0 | 0.0 | 1.4 | 0.49 | 87.2 % |
| Example 7 | 93.2 | 0.8 | 0.3 | 5.2 | 0.0 | 0.0 | 0.5 | 0.0 | 1.8 | 0.33 | 93.2 % |
| Example 8 | 93.5 | 0.5 | 0.5 | 4.5 | 0.0 | 0.0 | 0.0 | 1.0 | 1.2 | 0.45 | 90.1 % |
| Example 9 | 95.0 | 0.5 | 0.0 | 4.5 | 0.0 | 0.0 | 0.0 | 0.0 | 1.5 | 0.44 | 88.2 % |
| Comparative Example 1 | 92.0 | 0.0 | 0.5 | 5.0 | 2.5 | 0.0 | 0.0 | 0.0 | 2.1 | 0.31 | 84.1 % |
| Comparative Example 2 | 92.0 | 0.5 | 1.0 | 5.5 | 1.0 | 0.0 | 0.0 | 0.0 | 2.8 | 0.36 | 84.8 % |
| Comparative Example 3 | 92.0 | 0.5 | 1.0 | 5.5 | 1.0 | 0.0 | 0.0 | 0.0 | 2.2 | 0.53 | 82.6 % |
| Comparative Example 4 | 92.5 | 0.0 | 2.0 | 5.5 | 0.0 | 0.0 | 0.0 | 0.0 | 1.4 | 0.38 | 84.9 % |
| Comparative Example 5 | 93.5 | 0.5 | 1.0 | 4.5 | 0.0 | 0.5 | 0.0 | 0.0 | 0.8 | 0.37 | 84.7 % |
| Comparative Example 6 | 94.0 | 0.5 | 1.0 | 4.5 | 0.0 | 0.0 | 0.0 | 0.0 | 1.7 | 0.27 | 84.4 % |
| Comparative Example 7 | 95.5 | 0.0 | 0.0 | 4.5 | 0.0 | 0.0 | 0.0 | 0.0 | 1.7 | 0.33 | 84.2 % |

As can be understood from Table 1, all of Examples 1 to 9 exhibited higher charge/discharge efficiencies than Comparative Examples 1 to 7. These results show that the charge/discharge efficiency is improved even when the ratio of Co is 2.0 mol% or less in a positive electrode active material, so long as the positive electrode active material includes a lithium transition metal oxide having a layered structure and containing Ni, Nb, and an arbitrary element of Co, wherein: the ratio of Ni, the ratio of Nb, and the ratio of Co relative to the total amount of metal elements excluding Li in the lithium transition metal oxide are respectively in the ranges of 90 mol% $\leq$ Ni < 100 mol%, 0 mol% < Nb $\leq$ 3 mol%, and Co $\leq$ 2.0 mol%; wherein the ratio of metal elements other than Li present in a Li layer in the layered structure is in the range from 0.9 mol% to 2.5 mol% relative to the total amount of metal elements excluding Li in the lithium transition metal oxide; and wherein, regarding the lithium transition metal oxide, the half width n of the diffraction peak of the (208) plane in an X-ray diffraction pattern obtained by X-ray diffractometry is such that 0.30° $\leq$ n $\leq$ 0.50°.

**Claims**

1.   A positive electrode active material for non-aqueous electrolyte secondary batteries, comprising

a lithium transition metal oxide having a layered structure and containing Ni, Nb, and an arbitrary element of Co, wherein
a ratio of Ni relative to a total amount of metal elements excluding Li in the lithium transition metal oxide is in a range of 90 mol% $\leq$ Ni < 100 mol%;
a ratio of Nb relative to the total amount of metal elements excluding Li in the lithium transition metal oxide is in a range of 0 mol% < Nb $\leq$ 3 mol%;
a ratio of Co relative to the total amount of metal elements excluding Li in the lithium transition metal oxide is in a range of Co $\leq$ 2.0 mol%;
a ratio of metal elements other than Li present in a Li layer in the layered structure is in a range from 0.9 mol% to 2.5 mol% relative to the total amount of metal elements excluding Li in the lithium transition metal oxide; and regarding the lithium transition metal oxide, a half width n of a diffraction peak of a (208) plane in an X-ray diffraction pattern obtained by X-ray diffractometry is such that $0.30° \leq n \leq 0.50°$.

2. The positive electrode active material for non-aqueous electrolyte secondary batteries according to claim 1, wherein a lattice constant a indicating an a-axis length and a lattice constant c indicating a c-axis length in a crystal structure obtained from a result of analysis of an X-ray diffraction pattern obtained by X-ray diffractometry are respectively in a range of $2.870$ Å $\leq a \leq 2.877$ Å and a range of $14.18$ Å $\leq c \leq 14.20$ Å.

3. The positive electrode active material for non-aqueous electrolyte secondary batteries according to claim 1 or 2, wherein
a crystallite size s calculated by the Scherrer equation from a half width of a diffraction peak of a (104) plane in a X-ray diffraction pattern obtained by X-ray diffractometry is in a range of $400$ Å $\leq s \leq 600$ Å,

4. A method for producing the positive electrode active material for non-aqueous electrolyte secondary batteries according to any one of claims 1 to 3, comprising

a multi-step firing process including: a first firing step of firing a mixture including a Li-containing compound, a compound containing Ni and an arbitrary element of Co, and a Nb-containing compound, in a firing furnace under an oxygen stream at a first heating rate up to a first set temperature no lower than 450 °C and no higher than 680 °C; and a second firing step of firing the fired product obtained by the first firing step, under an oxygen stream at a second heating rate up to a second set temperature exceeding 680 °C and no higher than 800 °C, wherein
the first heating rate is in a range from 1.5 °C/min to 5.5 °C/min, and the second heating rate is lower than the first heating rate and is in a range from 0.1 °C/min to 3.5 °C/min.

5. The method for producing the positive electrode active material for non-aqueous electrolyte secondary batteries according to claim 4, wherein a hold time for the first set temperature in the first firing step is in a range from 0 hour to 5 hours.

6. The method for producing the positive electrode active material for non-aqueous electrolyte secondary batteries according to claim 4 or 5, wherein a hold time for the second set temperature in the second firing step is in a range from 1 hour to 10 hours.

7. The method for producing the positive electrode active material for non-aqueous electrolyte secondary batteries according to any one of claims 4 to 6, wherein an oxygen concentration in the oxygen stream is 60 % or higher, and a flow rate of the oxygen stream is in a range from 0.2 mL/min to 4 mL/min per 10 cm$^3$ of the firing furnace and 0.3 L/min or higher per 1 kg of the mixture.

8. The method for producing the positive electrode active material for non-aqueous electrolyte secondary batteries according to any one of claims 4 to 7, wherein a maximum pressure applied to an interior of the firing furnace during the multi-step firing process is in a range from 0.1 kPa to 1.0 kPa in addition to a pressure outside the firing furnace.

9. A non-aqueous electrolyte secondary battery comprising a positive electrode containing the positive electrode active material for non-aqueous electrolyte secondary batteries according to any one of claims 1 to 3.

## INTERNATIONAL SEARCH REPORT

| International application No. |
|---|
| PCT/JP2019/042798 |

A. CLASSIFICATION OF SUBJECT MATTER
C01G 53/00(2006.01)i; H01M 4/525(2010.01)i
FI: H01M4/525; C01G53/00 A
According to International Patent Classification (IPC) or to both national classification and IPC

B. FIELDS SEARCHED

Minimum documentation searched (classification system followed by classification symbols)
C01G53/00; H01M4/525

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-525578 A (INDUSTRY-UNIVERSITY COOPERATION FOUNDATION HANYANG) 09.07.2009 (2009-07-09) paragraphs [0022]-[0023] | 1-9 |
| A | JP 2018-517250 A (LG CHEM, LTD.) 28.06.2018 (2018-06-28) paragraphs [0040]-[0046] | 1-9 |
| A | WO 2017/110063 A1 (PANASONIC IP MANAGEMENT CO., LTD.) 29.06.2017 (2017-06-29) paragraphs [0019], [0031]-[0033] | 1-9 |
| A | JP 2018-22689 A (SAMSUNG ELECTRONICS CO., LTD.) 08.02.2018 (2018-02-08) paragraphs [0022], [0027]-[0028], [0050] | 1-9 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 January 2020 (07.01.2020) | 21 January 2020 (21.01.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

International application No.

PCT/JP2019/042798

| Patent Documents referred in the Report | Publication Date | Patent Family | Publication Date |
|---|---|---|---|
| JP 2009-525578 A | 09 Jul. 2009 | US 2009/0068561 A1, paragraphs [0023]-[0025]<br>KR 10-2007-0097923 A | |
| JP 2018-517250 A | 28 Jun. 2018 | US 2018-0047974 A1, paragraphs [0013]-[0051]<br>KR 10-2017-0063146 A<br>CN 107615525 A | |
| WO 2017/110063 A1 | 29 Jun. 2017 | US 2018/0375096 A1, paragraphs [0022], [0034]-[0036]<br>CN 108292750 A | |
| JP 2018-22689 A | 08 Feb. 2018 | US 2018/0040882 A1, paragraphs [0059], [0068]-[0069], [0081]<br>EP 3279144 A1<br>KR 10-2018-0015575 A<br>CN 107689447 A | |

Form PCT/ISA/210 (patent family annex) (January 2015)

**REFERENCES CITED IN THE DESCRIPTION**

**Patent documents cited in the description**

- JP 2006310181 A

- JP 2009289726 A